# EUROPEAN PATENT APPLICATION

(11) **EP 0 722 254 A2**
(43) Date of publication of application: **17.07.1996**
(21) Application number: 96400082.2
(22) Date of filing: 12.01.1996
(51) Int. Cl.: H04N 9/83

(54) **Delay time compensating apparatus for PAL plus video cassette tape recorder**

(30) Priority: 14.01.1995 KR 9500571; 14.01.1995 KR 9500574
(71) Applicant: LG ELECTRONICS INC., Seoul (KR)
(72) Inventor: Chang, Chang-Keun, Inchon (KR); An, Dae Sung, Sungnam, Kyungki-Do (KR)
(74) Representative: Fort, Jacques

(57) **Abstract**

An improved delay time compensating apparatus for a PAL plus VCR, which includes an information signal separator (10) for separating a wide screen information signal from a combined picture signal; a luminance/chrominance signal separator (20) for separating a luminance signal and a chrominance signal from a combined picture signal; a luminance signal delay compensator (30) for delaying for a certain time a luminance signal outputted from the luminance/chrominance signal separator (20); a switch (50) for switching a wide screen information signal separated by the information signal separator (10) and a luminance signal outputted from the lumimance signal delay compensator (30) in accordance with an externally applied control signal and for inserting the wide screen information signal to the luminance signal; a luminance signal processor (60) for processing the signal outputted from the switch (50); a chrominance signal delay compensator (40) for delaying for a certain time a chrominance signal separated by the luminance/chrominance signal separator (20); a chrominance signal processor (70) for processing the chrominance signal outputted from the chrominance signal delay compensator (40); and a combining unit (80) for combining the output signal of the luminance signal processor (60) and the output signal of the chrominance signal processor (70) and for recording on a recording medium (90).

## Description

### BACKGROUND OF THE INVENTION

### 1. Field of the Invention

The present invention relates to a delay time compensating apparatus for a PAL plus video cassette tape recorder (VCR), and in particular to an improved delay time compensating apparatus for a PAL plus VCR capable of compensating delay time caused by a process of demodulating a helper signal to a chrominance sub-carrier so as to record a helper signal on a luminance signal band in a recording mode and of compensating delay time caused by a process of carrying a helper signal recorded on a luminance signal band on a chrominance signal band in a reproducing mode in a PAL plus VCR.

### 2. Description of the Conventional Art

As well known to those who skilled in the art, the band width of a vertical helper signal having information with respect to a PAL plus broadcasting signal having a wide screen signal generally has a range of 3.5 Mhz. Therefore, when PAL plus broadcasting signal is recorded on VCR, a certain process with respect thereto is necessary. When there is not a certain process, since a helper signal contained in a chrominance sub-carrier region is low-pass-converted, the helper signal is recognized as a chrominance signal and recorded on a chrominance signal region in a recording mode, and in a reproducing mode, since the helper signal is read from the chrominance signal region, picture deterioration can occur because the helper signal affects the chrominance signal. Therefore, when processing the helper signal, the helper signal contained in the chrominance signal band is inserted to the luminance signal band and recorded thereon in a recording mode, and the helper signal recorded on the luminance signal band is detected and contained in the chrominance signal band in a reproducing mode.

However, when processing the helper signal and inserting the helper signal contained in the chrominance signal band in the luminance signal band, or when detecting the helper signal recorded on the luminance signal band and reproducing the broadcasting signal recorded using a PAL plus VCR without considering delay time which occurs when the helper signal carried on the chrominance signal band is outputted, each synchronous signal thereof does not coincide. Therefore, broadcasting signal recorded by a PAL plus VCR can not accurately be reproduced in another PAL plus VCR or other type PAL VCR, so that deteriorations of picture quality and sound occur. In addition, compatibility between VCRs is decreased.

### SUMMARY OF THE INVENTION

Accordingly, it is an object of the present invention to provide a delay time compensating apparatus for a PAL plus VCR, which overcome the problems encountered in a conventional delay time compensating apparatus for a PAL plus VCR.

It is another object of the present invention to provide an improved delay time compensating apparatus for a PAL plus VCR capable of compensating delay time caused by a process of demodulating a helper signal to a chrominance sub-carrier signal so as to record a helper signal on a luminance signal band in a recording mode and of compensating delay time caused by a process of carrying a helper signal recorded on a luminance signal band on a chrominance signal band in a reproducing mode in a PAL plus VCR.

To achieve the above objects, in accordance with a first embodiment according to the present invention, there is provided a delay time compensating apparatus for a PAL plus VCR, which includes an information signal separator for separating a wide screen information signal from a combined picture signal; a luminance/chrominance signal separator for separating a luminance signal and a chrominance signal from a combined picture signal; a luminance signal delay compensator for delaying for a certain time a luminance signal outputted from the luminance/chrominance signal separator; a switch for switching a wide screen information signal separated by the information signal separator and a luminance signal outputted from the luminance signal delay compensator in accordance with an externally applied control signal and for inserting the wide screen information signal to the luminance signal; a luminance signal processor for processing the signal outputted from the switch; a chrominance signal delay compensator for delaying for a certain time a chrominance signal separated by the luminance/chrominance signal separator; a chrominance signal processor for processing the chrominance signal outputted from the chrominance signal delay compensator; and a combining unit for combining the output signal of the luminance signal processor and the output signal of the chrominance signal processor and for recording on a recording medium.

To achieve the above objects, in accordance with a second embodiment according to the present invention, there is provided a delay time compensating apparatus for a PAL plus VCR, which includes a luminance/chrominance signal separator for a luminance signal and a chrominance signal from a picture signal reproduced from a recording medium; an information signal separator for separating a wide screen information signal from the thusly separated luminance signal; a luminance signal delay compensator for delaying the separated luminance signal for a certain time; a chrominance signal delay compensator for delaying the separated chrominance signal for a certain time; a first switch for switching the chrominance signal outputted from the chrominance signal delay compensator and the wide screen information signal separated by the information signal separator in accordance with an externally applied control signal and for inserting the wide screen information signal to a chrominance signal; a luminance signal processor for processing the luminance signal outputted from the luminance signal delay compensator; and a chrominance signal processor for processing a chrominance signal outputted from the first switch.

### BRIEF DESCRIPTION OF THE DRAWINGS

Fig. 1 is a block diagram of a circuit for compensating delay time caused by a process of a helper signal in a recording mode of a first embodiment according to the present invention.

Fig. 2 is a block diagram of a circuit for compensating delay time caused by a process of a helper signal in a reproducing mode of a second embodiment according to the present invention.

### DETAILED DESCRIPTION OF THE INVENTION

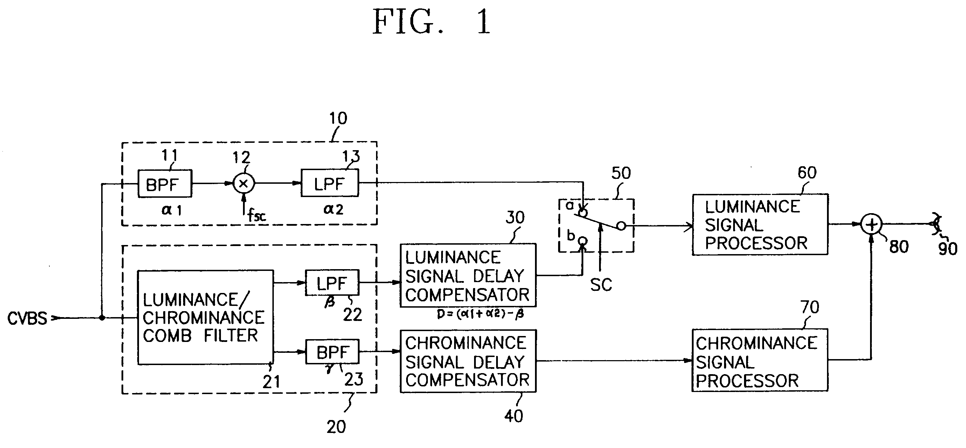

Fig. 1 shows a circuit for compensating delay time caused by a process of a helper signal in a recording mode of a first embodiment according to the present invention, which includes an information signal separator 10 for separating a helper signal, which is a wide screen information signal, from a combined picture signal CVBS, a luminance/ chrominance signal separator 20 for separating the combined picture signal into a luminance signal and a chrominance signal, a luminance signal delay compensator 30 for delaying the luminance signal outputted from the luminance/chrominance signal separator 20 for a certain time, a chrominance signal delay compensator 40 for delaying the chrominance signal outputted from the luminance/chrominance signal separator 20 for a certain time, a switch 50 for selecting a helper signal outputted from the information signal separator 10 and a main luminance signal Y outputted from the luminance signal delay compensator 30, a luminance signal processor 60 for processing the luminance signal outputted from the switch 50, a chrominance signal processor 70 for processing the chrominance signal outputted from the chrominance signal delay compensator 40, a combining unit 80 for combining the output signals of the luminance signal processor 60 and the chrominance signal processor 70, and a recording head 90 for recording the output signal of the combining unit 80 on a recording medium such as a magnetic tape for a VCR.

Here, the information signal separator 10 includes a band pass filter 11 for detecting helper signal by band-pass-filtering a combined picture signal, a demodulator 12 for demodulating the helper signal outputted from the band pass filter 11 to a chrominance sub-carrier Fsc, and a low pass filter 13 for removing a high frequency component during a demodulating. The luminance/chrominance signal separator 20 includes a luminance/chrominance comb filter 21 for comb-filtering the combined picture signal CVBS and for separating the signal into a luminance signal Y and a chrominance signal C, a low pass filter 22 for removing a high frequency component from the luminance signal Y outputted from the luminance/chrominance signal comb filter 21 and for outputting to the luminance signal delay compensator 30, and a band pass filter 23 for band-pass-filtering the chrominance signal C outputted from the luminance/chrominance signal comb filter 21 and for outputting to the chrominance signal delay compensator 40.

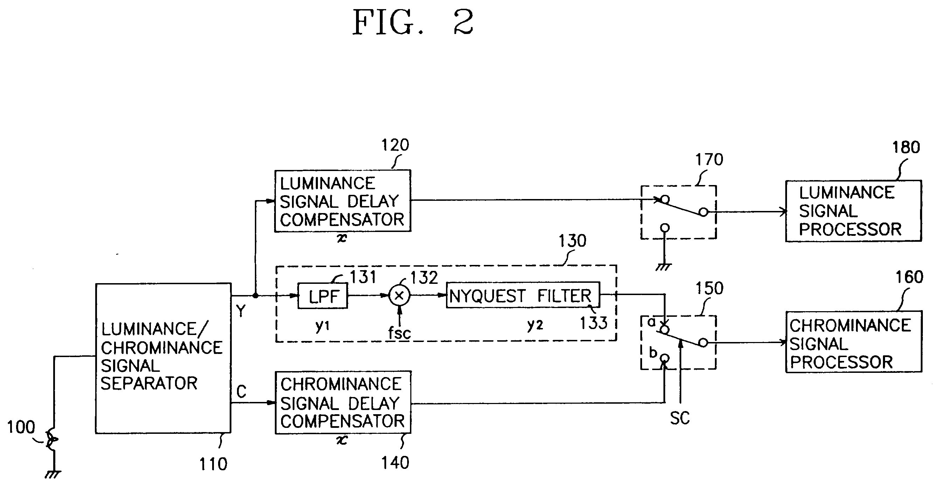

Fig. 2 shows a circuit for compensating delay time caused by a process of a helper signal in a reproducing mode of a second embodiment according to the present invention, which includes a luminance.chrominance signal separator 110 for separating the combined picture signal reproduced through a reproducing head 100 into a luminance signal Y and a chrominance signal C, a luminance signal delay compensator 120 for delaying the luminance signal Y separated by the luminance/chrominance signal separator 110 for a certain time, an information signal separator 130 for demodulating the helper signal, which is a wide screen information signal, from the luminance signal Y, a chrominance signal delay compensator 140 for delaying the chrominance signal C separated by the luminance/chrominance signal separator 110 for a certain time, a first switch 150 for selecting and outputting the helper signal outputted from the information signal separator 130 and the chrominance signal C outputted from the chrominance signal delay compensator 140 and for inserting the helper signal to the chrominance signal C, a chrominance signal processor 160 for processing the output signal of the first switch 150, a second switch 170 for selecting and outputting the luminance signal outputted from the luminance signal delay compensator 120 and a certain direct current component and for outputting a certain signal of the luminance signal except a helper signal interval, and a luminance signal processor 180 for processing the output signal of the second switch 170.

Here, the information signal separator 130 includes a low pass filter 131 for lowpass-filtering the luminance signal Y outputted from the luminance/chrominance signal separator 110 and for separating a helper signal, a modulator 132 for modulating the helper signal outputted from the low pass filter 131 to a chrominance sub-carrier signal Fsc, and a Nyquest filter 133 for Nyquest-filtering the helper signal outputted from the modulator 132 and for outputted to the first switch 150.

The operation and effects of the delay time compensating apparatus for a PAL plus VCR will now be explained with reference to the accompanying drawings.

To begin with, as shown in Fig. 1, the combined picture signal CVBS includes a helper signal having information with respect to the PAL plus broadcasting signal. A frequency band of a helper signal of the combined picture signal CVBS is filtered by the band pass filter 11 of the information signal separator 10. The helper signal filtered by the band pass filter 11 is demodulated to a chrominance sub-carrier by the demodulator 12. A high frequency component, which is generated during the demodulating process, of the thusly demodulated helper signal is removed by the low pass filter 13 and transmitted to a fixing terminal "a" of the switch 50.

In addition, the combined picture signal CVBS is separated into a luminance signal Y and a chrominance signal C by the luminance/chrominance signal comb filter 21 of the luminance/chrominance signal separator 20, and the thusly separated luminance signal Y, of which its high frequency component is removed by the low pass filter 22, is transmitted to a fixing terminal "b" of the switch 22 through the luminance signal delay compensator 30. Here, the time that the luminance signal is delayed by the luminance signal delay compensator 30 corresponds to a certain time D. That is, the time D is obtained by subtracting the time β that the main luminance signal Y is delayed by the low pass filter 22 of the luminance/chrominance signal separator 20 from the sum time "α1 + α2" where α1 and α2 are the time that the combined picture signal is delayed by the band pass filter 11 and the low pass filter 13 of the information signal, respectively. In more detail, the time D can be expressed as "(α1 + α2) - β".

The switch 50 is switched in accordance with an externally applied switching control signal SC and inserts the helper signal outputted from the low pass filter 13 to the main luminance signal Y outputted from the luminance signal delay compensator 30, and the switching control signal SC is referred to a signal for controlling only the interval of the helper signal. Thereafter, the output signal of the switch 50 is processed by the luminance signal processor 60 and transmitted to the combining unit 80 as an one side input signal.

In addition, the chrominance signal C outputted from the luminance/chrominance signal comb filter 21, of which its high frequency component is removed during a comb filtering process by the band pass filter 23, is transmitted to the chrominance signal delay compensator 40. The chrominance signal delay compensator 40 delays a certain chrominance signal for a certain time so that the timing of the band-pass-filtered chrominance signal C and the luminance signal Y can be coincided. At this time, the delay time of the chrominance signal delay compensator 40 is set to have a certain delay time "D - Υ" where the delay time Υ of the band pass filter 23 is subtracted the delay time D of the luminance signal delay compensator 30. The chrominance signal, of which its delay time is adjusted, is processed by the chrominance processor 70 and is transmitted to the combining unit 80. The combining unit 80 combines the output signals of the luminance signal processor 60 and the chrominance signal processor 70 and outputs to the recording head 90, so that the combined signals are recorded on a recording medium such as a tape of VCR.

Meanwhile, the process of compensating the delay time of the combined picture signal recorded on the recording medium in a reproducing mode will now be explained with reference to Fig. 2.

To begin with, when the combined picture signal CVBS recorded on a certain recording medium is reproduced by the reproducing head 100, the combined picture signal CVBS is separated into a luminance signal Y and a chrominance signal C by the luminance/chrominance signal separator 110. The thusly separated luminance signal Y contains a main luminance signal and a helper signal modulated to the luminance signal band. The signal is low-pass-filtered by the low pass filter 131 of the information signal separator 130, and thusly filtered signal is modulated in accordance with a chrominance sub-carrier Fsc by the modulator 132 and is Nyquest-filtered by the Nyquest filter 133, so that the helper signal modulated to the luminance signal band is recovered. The thusly recovered signal is transmitted to the fixing terminal "a" of the first switch 150.

In addition, the luminance signal Y is delayed by the luminance signal delay compensator 120 for a certain time and transmitted to the second switch 170. The second switch 170 selects a certain signal having a direct current level in a helper signal interval and selects an output signal of the luminance signal delay compensator 120 in a certain interval except the helper signal interval, so that the luminance signal except the helper signal interval is transmitted to the luminance signal processor 180. At this time, the delay time of the luminance signal delay compensator 120 is et to have a certain time "x = y1 + y2" where y1 denotes a time that the luminance signal Y is delayed by the low pass filter 131 of the information signal separator 130 and y2 denotes a time that the luminance signal Y is delayed by the Nyquest filter 133.

The chrominance signal C separated by the luminance/chrominance signal separator 110 is delayed by the chrominance signal delay compensator 140 for a certain time and outputted to the terminal "b" of the first switch 150. At this time, the delay time of the chrominance signal delay compensator 140 has a delay time "x = y1 + y2" which is the same as the luminance signal delay compensator 120. Therefore, the first switch 150 selects the helper signal outputted from the Nyquest filter 133 and the chrominance signal outputted from the chrominance signal delay compensator 140, so that the chrominance signal is inserted to the helper signal and outputted to the chrominance signal processor 160.

As described above, the delay time compensating apparatus for a PAL plus VCR according to the present invention is directed to demodulating the helper signal to a subcarrier and recording on a luminance signal path in a recording mode, so that the delay time, which occurs during a process of outputting the helper signal to a chrominance signal region, can be properly compensated in a reproducing mode. Therefore, it is possible to prevent incoincidence of the timing between the luminance signal and the chrominance signal when recording the broadcasting signal using a PAL plus VCR and reproducing the recorded signal, thus improving compatibility of the VCR.

Although the preferred embodiment of the present invention has been disclosed for illustrative purposes, those skilled in the art will appreciate that various modifications, additions and substitutions are possible, without departing from the scope and spirit of the invention as described in the accompanying claims.

## Claims

1. A delay time compensating apparatus for a PAL plus VCR, comprising:
an information signal separator for separating a wide screen information signal from a combined picture signal;
a luminance/chrominance signal separator for separating a luminance signal and a chrominance signal from a combined picture signal;
a luminance signal delay compensator for delaying for a certain time a luminance signal outputted from said luminance/chrominance signal separator;
a switch for switching a wide screen information signal separated by said information signal separator and a luminance signal outputted from said luminance signal delay compensator in accordance with an externally applied control signal and for inserting said wide screen information signal to said luminance signal;
a luminance signal processor for processing the signal outputted from said switch;
a chrominance signal delay compensator for delaying for a certain time a chrominance signal separated by the luminance/chrominance signal separator;
a chrominance signal processor for processing the chrominance signal outputted from said chrominance signal delay compensator; and
a combining unit for combining the output signal of said luminance signal processor and the output signal of said chrominance signal processor and for recording on a recording medium.

2. The apparatus of claim 1, wherein a delay time of said luminance signal delay compensator is adjusted so that the time that the information signal separator separates a wide screen signal from a combined picture signal and outputs to the switch and the time that the luminance/chrominance signal separator separates a luminance signal from a combined picture signal and outputs to the switch can be the same.

3. The apparatus of claim 2, wherein a delay time of the luminance signal delay compensator is obtained by subtracting the delay time of the luminance/ chrominance signal separator from the delay time of the information signal separator.

4. The apparatus of claim 1, wherein a delay time of said chrominance signal delay compensator is adjusted so that the time that the wide screen information signal is inserted to the luminance signal separated from the combined picture signal and the time that the luminance/chrominance signal separator separates a chrominance signal from the combined picture signal can be the same.

5. The apparatus of claim 4, wherein a delay time of said chrominance signal delay compensator is obtained by subtracting the delay time that a chrominance signal is separated from a combined picture signal by the luminance/chrominance signal separator from the delay time of the luminance signal delay compensator.

6. A delay time compensating apparatus for a PAL plus VCR, comprising:
a luminance/chrominance signal separator for a luminance signal and a chrominance signal from a picture signal reproduced from a recording medium;
an information signal separator for separating a wide screen information signal from the thusly separated luminance signal;
a luminance signal delay compensator for delaying the separated luminance signal for a certain time;
a chrominance signal delay compensator for delaying the separated chrominance signal for a certain time;
a first switch for switching the chrominance signal outputted from said chrominance signal delay compensator and the wide screen information signal separated by the information signal separator in accordance with an externally applied control signal and for inserting the wide screen information signal to a chrominance signal;
a luminance signal processor for processing the luminance signal outputted from said luminance signal delay compensator; and
a chrominance signal processor for processing a chrominance signal outputted from said first switch.

7. The apparatus of claim 6, wherein a delay time that a luminance signal is delayed by said luminance signal delay compensator is the same as the time that the wide screen information signal is separated by the information signal separator.

8. The apparatus of claim 6, wherein a delay time that a chrominance signal is delayed by said chrominance signal delay compensator is the same as the time that the wide screen information signal is separated by the information signal separator.

9. The apparatus of claim 6, wherein said apparatus further includes a second switch for selecting a certain direct current signal in a wide screen information signal interval and for selecting an output signal of the luminance signal delay compensator in a certain interval except said wide screen information signal interval and for outputting to the luminance signal processor.
